# EUROPÄISCHE PATENTSCHRIFT

(11) **EP 2 243 178 B1**
(45) Veröffentlichungstag und Bekanntmachung des Hinweises auf die Patenterteilung: **10.04.2013**
(21) Anmeldenummer: 09713075.1
(22) Anmeldetag: 19.02.2009
(51) Int. Cl.: H01M 2/02, H01M 2/10, H01M 10/50, H01M 2/26, H01M 10/48

(54) **BATTERIE MIT MEHREREN EINZELZELLEN**
BATTERY COMPRISING A PLURALITY OF INDIVIDUAL CELLS
BATTERIE AVEC PLUSIEURS ÉLÉMENTS INDIVIDUELS

(30) Priorität: 23.02.2008 DE 102008010828
(43) Veröffentlichungstag der Anmeldung: 27.10.2010
(73) Patentinhaber: Daimler AG, 70327 Stuttgart (DE)
(72) Erfinder: MEINTSCHEL, Jens, 02994 Bernsdorf (DE); SCHRÖTER, Dirk, 71364 Winnenden (DE); WARTHMANN, Wolfgang, 71384 Weinstadt (DE)
(74) Vertreter: JENSEN & SON
(86) Internationale Anmeldenummer: PCT/EP2009/001179
(87) Internationale Veröffentlichungsnummer: WO 2009/103527

(56) Entgegenhaltungen:
- WO-A-01/95408
- JP-A- 9 035 725
- US-A- 5 314 507
- US-A1- 2004 038 123

## Beschreibung

Die Erfindung betrifft eine Batterie mit mehreren Einzelzellen gemäß dem Oberbegriff des Anspruchs 1.

Nach dem Stand der Technik sind Hochvolt-Batterien, z. B. Lithium-lonen-Batterien, für Fahrzeuganwendungen bekannt, die insbesondere aus mehreren elektrisch in Reihe und/oder parallel verschalteten Einzelzellen aufgebaut sind. Dabei können zum einen aus einem Gehäuse der Einzelzellen herausgeführte Pole mittels Zellverbindern elektrisch verbunden sein, wobei an den Zellverbindern Anschlusskontakte für Überwachungsfunktionen, z. B. Zellspannungsüberwachung, vorgesehen sind. Zum anderen sind bei bipolaren Einzelzellen, bei welchen ein Plus- und ein Minuspol direkt auf gegeneinander elektrisch isolierte Teile des Gehäuses gelegt sind, die elektrischen Kontakte bildenden Teile des Gehäuses direkt form- und/oder kraftschlüssig miteinander verbunden. Bei einer Verwendung dieser kraftschlüssigen Verbindung besteht keine Anschlussmöglichkeit für Messanschlüsse beispielsweise zur Zellspannungsüberwachung oder zum Zellspannungsausgleich.

US 5 314 507 offenbart eine Batterie des Stands der Technik.

Der Erfindung liegt daher die Aufgabe zugrunde, eine verbesserte Batterie anzugeben, welche insbesondere die im Stand der Technik angegebenen Nachteile überwindet und einfach und kostengünstig herstellbar ist.

Die Aufgabe wird erfindungsgemäß mit einer Batterie gelöst, welche die im Anspruch 1 angegebenen Merkmale aufweist.

Vorteilhafte Ausgestaltungen der Erfindung sind Gegenstand der Unteransprüche.

Die erfindungsgemäße Batterie mit mehreren Einzelzellen, deren Pole elektrisch parallel und/oder seriell miteinander verschaltet sind und einen Zellverbund bilden, wobei die jeweilige Einzelzelle von einem aus zwei Zellgehäuseseitenwände und einem Zellgehäuserahmen (2.3) gebildeten Zellgehäuse umgeben ist, zeichnet sich dadurch aus, dass zumindest einer der Pole einer jeweiligen Einzelzelle zwei Spannungs-Anschlusskontakte aufweist. Hierdurch ist eine bauraum- und funktionsoptimierte Anordnung von Anschlüssen, insbesondere von unterschiedlichen Spannungs-Anschlusskontakten, wie z. B. Hoch- oder Niederspannungs-Anschlusskontakten (auch HV- oder NV-Kontakte genannt), ermöglicht.

Zweckmäßigerweise sind dabei die verschiedenen Spannungs-Anschlusskontakte zellintern elektrisch miteinander verschaltet, insbesondere parallel geschaltet. Hierzu wird insbesondere eine der elektrisch leitfähigen metallischen Zellgehäuseseitenwände verwendet. Hierdurch sind keine zusätzlichen Verbindungselemente, wie herkömmliche Zellverbinder, erforderlich. Damit wird eine Vereinfachung der Montage der Batterie und somit eine Kostenersparnis erreicht.

In einer möglichen Ausführungsform bildet ein erster Spannungs-Anschlusskontakt einen der Pole der Einzelzelle und der zweite Spannungs-Anschlusskontakt einen Messanschluss. Dabei sind die Pole der Einzelzelle in einfacher und Bauraum sparender Art und Weise durch die elektrisch leitfähigen, insbesondere metallischen Zellgehäuseseitenwände gebildet, wobei die Polkontakte unterschiedlicher Polarität der jeweiligen Einzelzelle direkt auf die gegeneinander elektrisch isolierte Zellgehäuseseitenwände gelegt sind.

In einer weiteren Ausführungsform sind die verschiedenen Spannungs-Anschlusskontakte unabhängig voneinander an beliebiger Stelle anordbar. In einer möglichen Ausführungsform ist der den Pol bildende Spannungs-Anschlusskontakt eine der Zellgehäuseseitenwände. Der andere als Messanschluss ausgebildete Spannungs-Anschlusskontakt ist als fahnenartige Verlängerung ausgeführt und steht radial in eine beliebige Richtung von der betreffenden Zellgehäuseseitenwand ab. Durch derartige, unter Verwendung einer einzigen Zellgehäuseseitenwand gebildete unterschiedliche Spannungs-Anschlusskontakte können diese optimal an Spannung und Strom sowie an deren Funktionen angepasst werden.

Zweckmäßigerweise sind die Pole verschiedener Einzelzellen durch Kontaktierung der Zellgehäuseseitenwände der Einzelzellen miteinander elektrisch verschaltet. Insbesondere in einem aus Flachzellen gebildeten Zellverbund sind die Einzelzellen oder Flachzellen in axialer Richtung miteinander kontaktiert. Dies stellt einen besonders kompakten, Bauraum sparenden Aufbau dar.

In bevorzugter Weise weist die mit zwei Spannungs-Anschlusskontakten versehene Zellgehäuseseitenwand einer jeden Einzelzelle als einen Spannungs-Anschlusskontakt einen Messanschluss auf. Zweckmäßigerweise ist der Messanschluss als eine von der Zellgehäuseseitenwand abstehende, fahnenartige Verlängerung ausgeführt, die elektrisch mit einem elektronischen Bauelement, insbesondere einer gekapselten elektronischen Baueinheit, verbunden ist. Das elektronische Bauelement verfügt vorzugsweise über Einrichtungen zu einer Zellspannungsüberwachung und einem Zellspannungsausgleich, so dass stets ein gleiches Spannungsniveau der Einzelzellen und somit eine höhere Zuverlässigkeit der Batterie sichergestellt sind.

In einer weiteren Ausgestaltung der Erfindung sind die Einzelzellen und/oder die Pole verschiedener Einzelzellen kraftschlüssig, formschlüssig und/oder stoffschlüssig miteinander verbunden. Dadurch wird in einfacher Art und Weise ein dauerhafter elektrischer Kontakt zwischen den Polen der Einzelzellen sichergestellt.

Zusätzlich sind die Einzelzellen aus einem in einem Zellgehäuse angeordneten Elektrodenstapel gebildet, wobei zumindest Elektroden unterschiedlicher Polarität durch einen Separator, vorzugsweise eine Separatorfolie, voneinander isolierend getrennt sind. In besonderer Weise bildet ein nach außerhalb des Elektrodenstapels geführter Randbereich der jeweiligen Elektrodenfolie einen als Stromableiterfahne ausgebildeten Polkontakt, wodurch eine aufwändige Kontaktierung von Elektrodenfolie und Polkontakt entfällt. Gleichzeitig ist diese Art der Kontaktierung sehr sicher gegen zumindest viele, insbesondere äußere Einflüsse wie Stöße oder Vibrationen.

Stromableiterfahnen, d.h. die Polkontakte, gleicher Polarität sind elektrisch leitend miteinander zu einem Pol verbunden. Ferner sind die Polkontakte eines Pols elektrisch leitend miteinander verpresst und/oder verschweißt.

Durch eine Anordnung des Elektrodenstapels in einem randseitig umlaufenden, insbesondere elektrisch isolierenden Zellgehäuserahmen kann in vorteilhafter Weise eine zusätzliche isolierende Anordnung eingespart werden. Weiterhin ist die Handhabbarkeit der Einzelzelle erleichtert bzw. sicherer gestaltet.

In besonderer Weise erfolgt, insbesondere bei bipolaren Einzelzellen, die Kontaktierung der Polkontakte direkt zu den einander gegenüberliegenden Zellgehäuseseitenwänden, insbesondere Flachseiten des Zellgehäuses. Diese Zellgehäuseseitenwände, insbesondere Flachseiten sind mittels des Zellgehäuserahmens gegeneinander elektrisch isoliert. Auf diese Weise werden Polkontakte (= Stromableiterfahnen) gleicher Polarität direkt mit einer Zellgehäuseseitenwand (= Zellaußenwand), vorzugsweise einer Flachseite des Zellgehäuses, insbesondere einer Flachzelle, elektrisch verbunden, so dass die Zellgehäuseseitenwände die elektrischen Pole der Einzelzelle bilden. Auch liegt keine Schwächung der Druckdichtigkeit des Zellgehäuses der Einzelzelle vor, da keine Kontaktdurchführung der Pole erfolgt. Hiermit ist auch eine Verbesserung der Dichtigkeit des Inneren des Zellengehäuses gegenüber einem Durchtritt an Feuchtigkeit verbunden.

Gemäß einer sinnvollen Weiterführung der Erfindung ist an einer Zellgehäuseseitenwand einer ersten Einzelzelle und einer Zellgehäuseseitenwand einer letzten Einzelzelle des Zellverbundes zumindest jeweils ein elektrisches Anschlusselement angeordnet, so dass eine einfache elektrische Kontaktierung der Batterie möglich ist.

In einer Ausgestaltung der Erfindung weist der Zellgehäuserahmen zwei elektrisch voneinander isolierte und voneinander beabstandete Materialrücknahmen auf, in denen die als Stromableiterfahnen ausgebildeten Polkontakte jeweils einer Polarität angeordnet sind. In sinnvoller Weise ist die in Richtung der Stapelung der Elektrodenfolien gemessene lichte Höhe einer Materialrücknahme kleiner oder gleich der entsprechenden Erstreckung der unbeeinflusst übereinander gestapelten zugehörigen Polkontakte und deren parallel zur Flachseite einer Elektrodenfolie gemessene Tiefe größer oder gleich der entsprechenden Erstreckung der zugehörigen Polkontakte. Hierdurch sind die Polkontakte sicher in den Materialrücknahmen gehaltert und können bei insbesondere dichter Verbindung zwischen Zellgehäuserahmen und den Zellgehäuseseitenwänden elektrisch leitend mit diesen verpresst sein.

Um eine in der Batterie entstehende Verlustwärme abzuführen, ist eine Wärmeleitplatte zur Kühlung der Batterie vorgesehen. In einer vorteilhaften Weiterführung der Erfindung ist zwischen der Wärmeleitplatte und dem Zellverbund ein wärmeleitfähiges Material eingebracht, welches vorzugsweise aus einer Vergussmasse, einem Lack und/oder einer Wärmeleitfolie gebildet ist. Dies führt zu einer Erhöhung des Wärmeüberganges zwischen dem Zellverbund und der Wärmeleitplatte und erhöht damit zum einen die Leistungsfähigkeit und zum anderen die Lebensdauer der Batterie.

In bevorzugter Weise sind zumindest der Zellverbund und die Wärmeleitplatte in einem Gehäuserahmen angeordnet, der insbesondere als zumindest ein den Zellverbund und die Wärmeleitplatte vollständig umschließendes Spannelement, insbesondere ein Spannband oder ein Spannrahmen, ausgebildet ist.

Durch eine oder mehrere der genannten Maßnahmen ist es möglich, bei einer preiswerten Herstellung den Aufbau der Batterie und die Kontaktierung der Einzelzellen zu vereinfachen, wobei gleichzeitig durch die Verwendung eines Dichtungselementes die Pole sicher vor Fremdstoffen, insbesondere Feuchtigkeit und daraus folgend vor Korrosion geschützt sind.

Ausführungsbeispiele der Erfindung werden im Folgenden anhand von Zeichnungen näher erläutert.

Dabei zeigen:
- Fig. 1: schematisch eine perspektivische Ansicht einer Einzelzelle,
- Fig. 2: schematisch eine Schnittdarstellurig der Einzelzelle gemäß Figur 1,
- Fig. 3: schematisch eine Explosionsdarstellung einer Einzelzelle,
- Fig. 4: schematisch ein vereinfachtes Schaltbild der elektrischen Verschaltung mehrerer Einzelzellen einer Batterie,
- Fig. 5: schematisch eine Explosionsdarstellung einer Batterie,
- Fig. 6: schematisch eine perspektivische Ansicht der Batterie gemäß Figur 5, und
- Fig. 7: schematisch eine Schnittdarstellung der Batterie gemäß Figur 6.

Einander entsprechende Teile sind in allen Figuren mit den gleichen Bezugszeichen versehen.

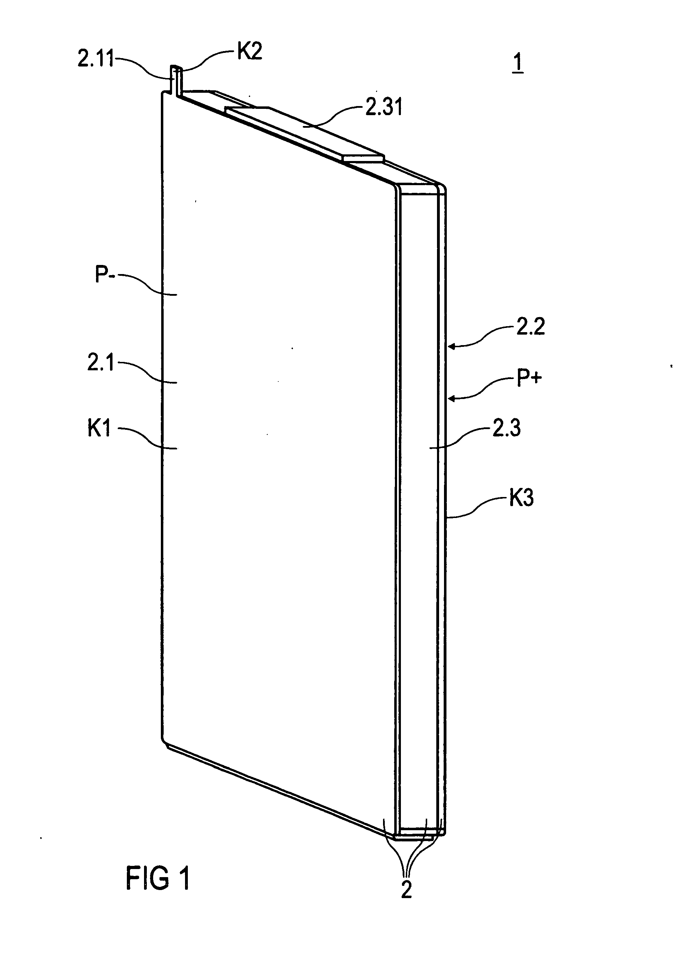

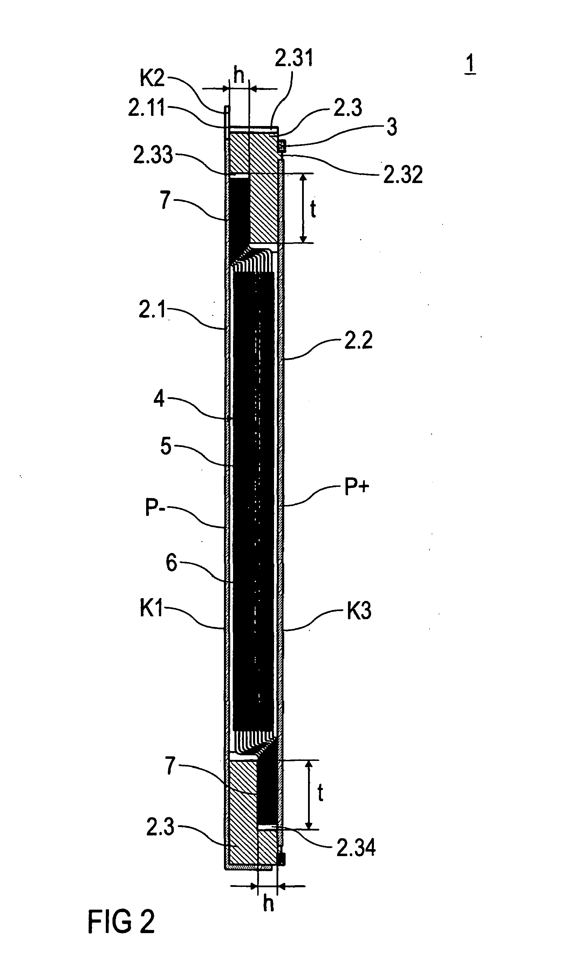

Figur 1 und Figur 2 zeigen eine als Flachzelle ausgebildete Einzelzelle 1. Dabei ist ein Zellgehäuse 2 der Einzelzelle 1 aus zwei Zellgehäuseseitenwänden 2.1, 2.2 und einem dazwischen angeordneten, randseitig umlaufenden Zellgehäuserahmen 2.3 gebildet.

Die Zellgehäuseseitenwände 2.1, 2.2 der Einzelzelle 1 sind elektrisch leitend ausgeführt und bilden Pole P+, P- der Einzelzelle 1.

Der Zellgehäuserahmen 2.3 ist elektrisch isolierend ausgeführt, so dass die Zellgehäuseseitenwände 2.1, 2.2 unterschiedlicher Polarität elektrisch voneinander isoliert sind.

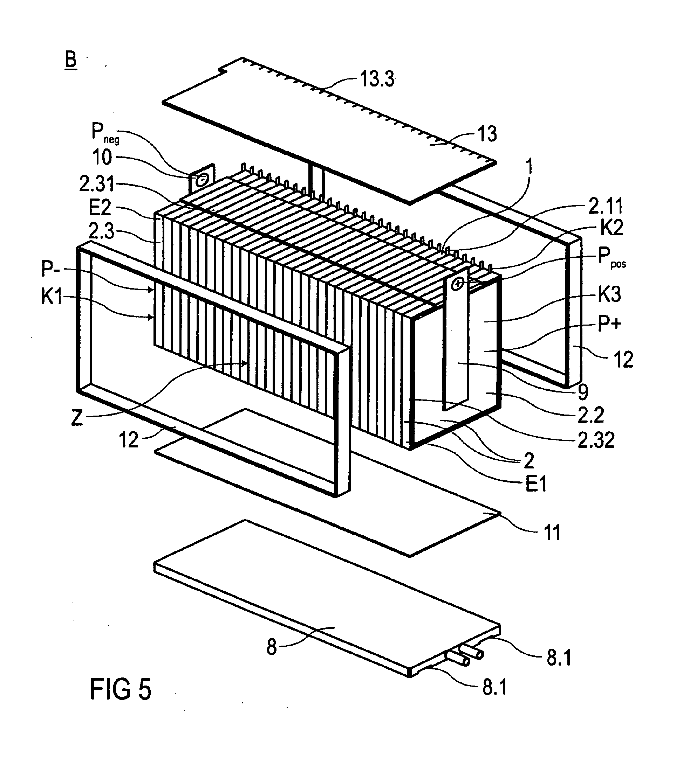

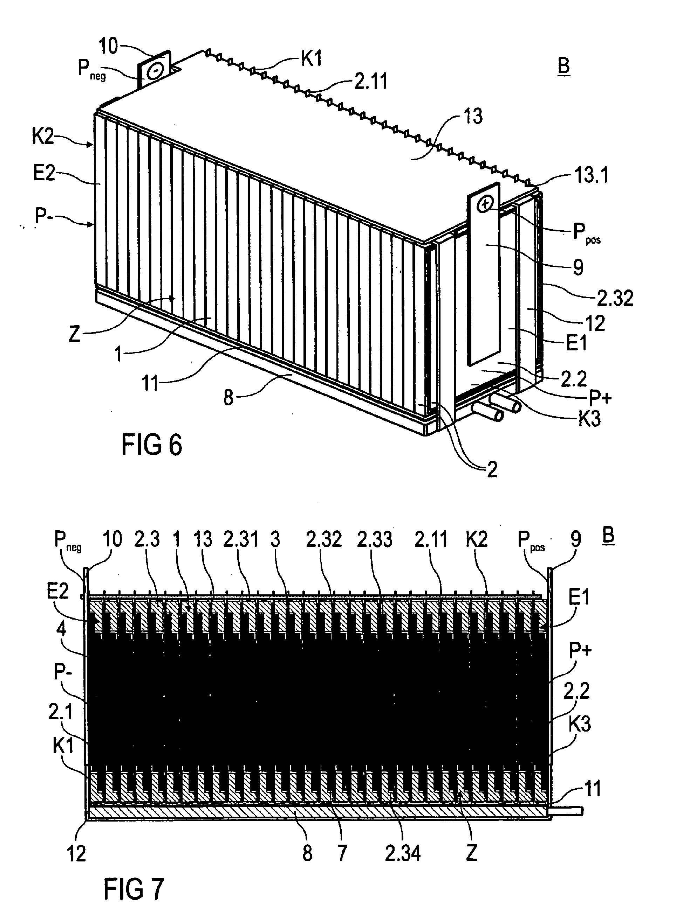

Der Zellgehäuserahmen 2.3 weist zusätzlich an einer Oberseite eine partielle Materialerhöhung 2.31 auf, deren Funktion in der Beschreibung der Figuren 5 bis 7 näher erläutert wird.

Dabei weist die Einzelzelle 1 mindestens drei Spannungs-Anschlusskontakte K1 bis K3 auf. Gemäß der Erfindung weist die den Pol P- bildende Zellgehäuseseitenwand 2.1 mindestens zwei Spannungs-Anschlusskontakte K1, K2 auf, die insbesondere zellintern elektrisch miteinander verschaltet, insbesondere parallel geschaltet sind. Dabei ist der erste Spannungs-Anschlusskontakt K1 durch den Pol P- der Einzelzelle 1 und somit die Zellgehäuseseitenwand 2.1 gebildet. Der zweite Spannungs-Anschlusskontakt K2 ist als Messanschluss 2.11 ausgeführt, der radial über die Zellgehäuseseitenwand 2.1 an einer beliebigen Position, über die Einzelzelle 1 als eine fahnenartige Verlängerung hinausragt.

Erfindungsgemäß besteht eine in den Figuren 5 bis 7 näher dargestellte Batterie B aus mehreren solchen Einzelzellen 1, deren Pole P+, P-, insbesondere die als Flachseiten ausgeführten Zellgehäuseseitenwände 2.1, 2.2, in Abhängigkeit von einer gewünschten Batteriespannung und -leistung parallel und/oder seriell miteinander verschaltet sind und einen in den Figuren 5 bis 7 dargestellten Zellverbund Z bilden.

Figur 2 zeigt in einer Schnittdarstellung der Einzelzelle 1 gemäß Figur 1 eine vorteilhafte Ausgestaltung der Erfindung, wobei in dem Zellgehäuse 2 ein Elektrodenstapel 4 angeordnet ist.

In einem mittleren Bereich sind dabei Elektrodenfolien 5 unterschiedlicher Polarität, insbesondere Aluminium- und/oder Kupferfolien und/oder Folien aus einer Metalllegierung, übereinander gestapelt und mittels eines Separators 6, insbesondere einer Separatorfolie, elektrisch voneinander isoliert.

In einem über den mittleren Bereich des Elektrodenstapels 4 überstehenden Randbereich der Elektrodenfolien 5 sind Elektrodenfolien 5 gleicher Polarität elektrisch miteinander verbunden. Die miteinander verbundenen Enden der Elektrodenfolien 5 gleicher Polarität bilden somit einen Polkontakt 7, der auch als Stromableiterfahne bezeichnet wird. Die Polkontakte 7 unterschiedlicher Polarität der Einzelzelle 1 werden im Weiteren zur besseren Übersichtlichkeit als Stromableiterfahnen 7 bezeichnet. Im Detail werden die Enden der Elektrodenfolien 5 elektrisch leitend miteinander verpresst und/oder verschweißt und bilden die Stromableiterfahnen 7 des Elektrodenstapels 4.

Der Elektrodenstapel 4 ist in dem den Elektrodenstapel 4 randseitig umlaufenden Zellgehäuserahmen 2.3 angeordnet. Der Zellgehäuserahmen 2.3 weist dazu zwei voneinander beabstandete Materialrücknahmen 2.33, 2.34 auf, die so ausgebildet sind, dass die Stromableiterfahnen 7 unterschiedlicher Polarität in den Materialrücknahmen 2.33, 2.34 angeordnet sind. Die lichte Höhe h der Materialrücknahmen 2.33, 2.34 ist so ausgebildet, dass sie der Erstreckung der unbeeinflusst übereinander gestapelten Stromableiterfahnen 7 entspricht oder geringer als diese ist. Die Tiefe t der Materialrücknahmen 2.33, 2.34 entspricht der Erstreckung der Stromableiterfahnen 7 oder ist größer ausgebildet als diese.

Da der Zellgehäuserahmen 2.3 vorzugsweise aus einem elektrisch isolierenden Material gefertigt ist, sind die Stromableiterfahnen 7 unterschiedlicher Polarität elektrisch voneinander isoliert, so dass zusätzliche Anordnungen für eine elektrische Isolation in vorteilhafter Weise nicht notwendig sind.

Bei einer Befestigung der Zellgehäuseseitenwände 2.1, 2.2, welche beispielsweise in nicht näher dargestellter Weise mittels Kleben und/oder Umbördeln der Flachseiten 8 in eine in dem Zellgehäuserahmen 6 umlaufende Aussparung erfolgt, werden die Stromableiterfahnen 7 unterschiedlicher Polarität gegen die Zellgehäuseseitenwände 2.1, 2.2 gepresst, so dass ein jeweiliges elektrisches Potenzial der Stromableiterfahnen 7 an den Zellgehäuseseitenwänden 2.1, 2.2 anliegt und diese die Pole P+, P- der Einzelzelle 1 bilden.

In einer Weiterbildung der Erfindung kann zwischen den Stromableiterfahnen 7, welche z. B. aus Kupfer gefertigt sind, und den Gehäuseseitenwänden 2.1, 2.2, welche z. B. aus Aluminium gefertigt sind, zusätzlich eine nicht näher dargestellte Folie, welche z. B. aus Nickel gefertigt ist, angeordnet sein, um eine verbesserte elektrische Anbindung zwischen den Stromableiterfahnen 7 und den Zellgehäuseseitenwänden 2.1, 2.2 zu erreichen.

In einer Ausgestaltung der Erfindung ist es weiterhin möglich, eine nicht näher dargestellte elektrisch isolierende Folie zwischen den Stromableiterfahnen 7 und den Zellgehäuseseitenwänden 2.1, 2.2 anzuordnen bzw. die Zellgehäuseseitenwände 2.1, 2.2 einseitig mit einer elektrischen isolierenden Schicht auszuführen, so dass eine elektrische Kontaktierung der Stromableiterfahnen 7 mit den Zellgehäuseseitenwänden 2.1, 2.2 erst bei einem nicht näher ausgeführten, aus dem Stand der Technik bekannten Durchschweißverfahren von außen durch die Zellgehäuseseitenwände 2.1, 2.2 entsteht.

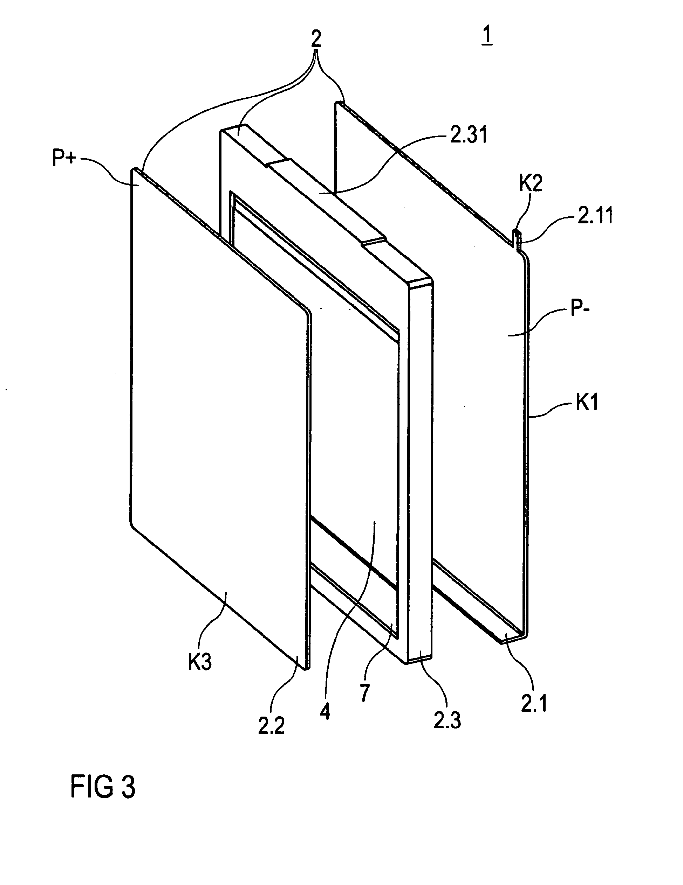

Figur 3 stellt eine Explosionsdarstellung der in den Figuren 1 bis 2 näher erläuterten Einzelzelle 1 dar und zeigt insbesondere die Anordnung des Elektrodenstapels 4 in dem Zellgehäuserahmen 2.3 sowie der Zellgehäuseseitenwände 2.1, 2.2.

In einer vorteilhaften Ausgestaltung der Erfindung ist die Zellgehäuseseitenwand 2.1 mit dem fahnenartigen Messanschluss 2.11 in einem unteren Bereich um 90° in Richtung des Zellgehäuserahmens 2.3 gebogen, so dass bei einer Verwendung einer in den Figuren 5 bis 7 dargestellten Wärmeleitplatte 8 eine Vergrößerung einer wirksamen Wärmeübergangsfläche und somit eine verbesserte Kühlung der Batterie B erzielt werden.

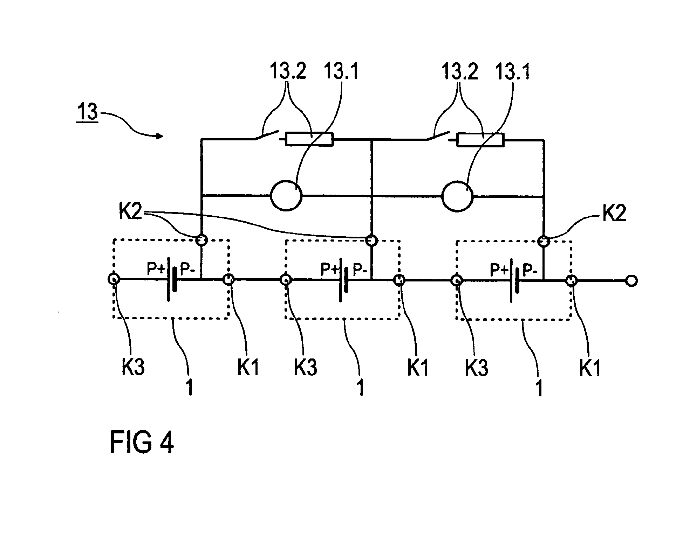

Figur 4 zeigt ein Schaltungsbild der erfindungsgemäßen zellinternen elektrischen Verschaltung der Spannungs-Anschlusskontakte K1 und K2 des einen Pols P- und somit der Zellgehäuseseitenwand 2.1. Dabei sind mehrere Einzelzellen 1 in Reihe elektrisch miteinander verschaltet und bilden eine Batterie B. Die Pole P- der Einzelzellen 1 weisen dabei jeweils zwei Spannungs-Anschlusskontakte K1 und K2 auf, wobei der Spannungs-Anschlusskontakt K1 den Pol P- bildet und der Spannungs-Anschlusskontakt K2 den Messanschluss 2.11 bildet, an welchem mindestens ein elektronisches Bauelement 13 anschließbar ist. Dabei kann das elektronische Bauelement 13 eine Einrichtung 13.1 zur Zellspannungsüberwachung, z. B. ein Spannungsmesser, und Einrichtungen 13.2 zum Zellspannungsausgleich, z. B. einen schaltbaren Widerstand zum Entladen der Einzellen mit der höchsten Spannung, umfassen. Die beiden Spannungs-Anschlusskontakte K1, K2 sind zellintern parallel geschaltet.

Figur 5 zeigt eine Explosionsdarstellung einer Batterie B mit einem aus mehreren Einzelzellen 1 gebildeten Zellverbundes Z. Zur Bildung des Zellverbundes Z werden die Pole P+, P- mehrerer Einzelzellen 1 in Abhängigkeit von einer gewünschten elektrischen Spannung und Leistung der Batterie B seriell und/oder parallel elektrisch miteinander verschaltet. Ebenfalls in Abhängigkeit von der gewünschten elektrischen Spannung und Leistung der Batterie B kann der Zellverbund Z in Weiterbildungen der Erfindung aus einer beliebigen Anzahl von Einzelzellen 1 gebildet sein.

Die in Figuren 4 und 5 dargestellte serielle elektrische Verschaltung der Pole P+, P- der Einzelzellen 1 wird durch die elektrische Kontaktierung der Zellgehäuseseitenwände 2.1, 2.2 von benachbarten Einzelzellen 1 mit unterschiedlichem elektrischem Potenzial realisiert. Dabei ist insbesondere die Zellgehäuseseitenwand 2.2 einer der Einzelzellen 1 kraftschlüssig, formschlüssig und/oder stoffschlüssig mit der Zellgehäuseseitenwand 2.1 mit dem fahnenartigen Messanschluss 2.11 einer benachbarten Einzelzelle 1 elektrisch verbunden.

In den Figuren 5 bis 7 ist die Batterie B, welche beispielsweise in einem Fahrzeug, insbesondere einem Hybrid- und/oder Elektrofahrzeug zum Einsatz kommt, in einer Explosionsdarstellung, einer perspektivischen Ansicht und als Schnittzeichnung dargestellt.

Die Batterie B ist im dargestellten Ausführungsbeispiel der Erfindung aus dreißig Einzelzellen 1 gebildet, welche elektrisch seriell miteinander verschaltet sind. Zu einer Entnahme und/oder einer Zuführung von elektrischer Energie aus und/oder in die Batterie B ist an der Zellgehäuseseitenwand 2.2 der ersten Einzelzelle E1 des Zellverbundes Z, welche insbesondere den positiven Pol P+ der ersten Einzelzelle E1 bildet, ein elektrisches Anschlusselement 9 angeordnet. Dieses Anschlusselement 9 ist als elektrische Anschlussfahne ausgeführt und bildet den positiven Polanschluss Pₚₒₛ der Batterie B.

Auch an der Zellgehäuseseitenwand 2.1 der letzten Einzelzelle E2 des Zellverbundes Z, welche insbesondere den negativen Pol P- der letzten Einzelzelle E2 bildet, ist ein elektrisches Anschlusselement 10 angeordnet. Dieses Anschlusselement 10 ist ebenfalls als elektrische Anschlussfahne ausgeführt und bildet den negativen Polanschluss P_{neg} der Batterie B.

In der dargestellten sinnvollen Weiterführung der Erfindung ist der Zellverbund Z thermisch mit der Wärmeleitplatte 8 gekoppelt. Dabei sind die Zellgehäuseseitenwände 2.1 mit dem um 90° in Richtung des Zellgehäuserahmens 2.3 gebogenen unteren Bereich direkt oder indirekt über ein wärmeleitfähiges Material, insbesondere eine Wärmeleitfolie 11, thermisch an die Wärmeleitplatte 8 gekoppelt, so dass eine effektive Kühlung der Batterie B erzielt wird.

In einer Weiterbildung der Erfindung kann das wärmeleitfähige Material zusätzlich oder alternativ aus einer Vergussmasse und/oder einem Lack gebildet sein.

Zu einer kraftschlüssigen Verbindung der Einzelzellen 1 zu dem Zellverbund Z und einer kraftschlüssigen Anbindung der Wärmeleitplatte 8 und der Wärmeleitfolie 11 an den Zellverbund 2 sind der Zellverbund Z, die Wärmeleitplatte 8 und die Wärmeleitfolie 11 in einem Gehäuserahmen angeordnet.

Dieser Gehäuserahmen ist insbesondere aus einem oder mehreren den Zellverbund Z vollständig umschließenden Spannelementen 12, z. B. Spannbänder, gebildet, die die Einzelzellen 1 bzw. den Zellverbund Z, die Wärmeleitplatte 8 und die Wärmeleitfolie 11 sowohl in horizontaler als auch in vertikaler Richtung kraftschlüssig verbinden.

Um einen sicheren Halt der Spannelemente 12 zu ermöglichen, sind an einer Unterseite der Wärmeleitplatte 8 vorzugsweise zu den Abmessungen der Spannelemente 12 korrespondierende Materialvertiefungen 8.1 ausgebildet.

In nicht näher dargestellten Weiterbildungen der Erfindung können einige oder alle . Komponenten, d. h. die Einzelzellen 1, die Wärmeleitplatte 8, die Wärmeleitfolie 11 oder die gesamte Batterie B alternativ oder zusätzlich in einem Batteriegehäuse teilweise oder vollständig gekapselt verbaut sein.

Ist die Batterie B beispielsweise eine Lithium-lonen-Hochvolt-Batterie, wird im Allgemeinen eine spezielle Elektronik benötigt, welche z. B. eine Zellspannung der Einzelzellen 1 überwacht und korrigiert, ein Batteriemanagementsystem, welches insbesondere eine Leistungsaufnahme und -abgabe der Batterie B steuert (= Batteriesteuerung), und Sicherungselemente, welche bei Fehlfunktionen der Batterie B eine sichere Abtrennung der Batterie B von einem elektrischen Netz durchführen.

Im dargestellten Ausführungsbeispiel der Erfindung ist ein elektronisches Bauelement 13 vorgesehen, welches zumindest nicht näher dargestellte Einrichtungen zur Zellspannungsüberwachung und/oder zu einem Zellspannungsausgleich beinhaltet. Das elektronische Bauelement 13 kann in einer Weiterführung der Erfindung auch als gekapselte elektronische Baueinheit ausgebildet sein.

Das elektronische Bauelement 13 ist kopfseitig an dem Zellverbund auf den Spannelementen 12 und den Zellgehäuserahmen 2.3 der Einzelzellen 1 angeordnet. Um eine möglichst große Auflagefläche des elektronischen Bauelementes 13 und gleichzeitig eine Fixierung der Spannelemente 12 an der Oberseite des Zellverbundes Z zu erreichen, ist an der Oberseite des Rahmens 2.3 einer jeden Einzelzelle 1 partiell die Materialerhöhung 2.31 ausgebildet, deren Höhe insbesondere der Dicke des Spannelementes 12 entspricht. Zu einer Befestigung des elektronischen Bauelementes 13 an dem Zellverbund Z und/oder an den Spannelementen 12 kommen nicht näher dargestellte kraftschlüssige, formschlüssige und/oder stoffschlüssige Verbindungstechniken zum Einsatz.

Für einen elektrischen Kontakt des Zellverbundes Z mit dem elektronischen Bauelement 13 sind die an den Zellgehäuseseitenwänden 2.1 angeordneten fahnenartigen Messanschlüsse 2.11 durch in dem elektronischen Bauelement 13 angeordnete Kontaktelemente 13.3 geführt, die eine zu den fahnenartigen Messanschlüsse 2.11 korrespondierende Form aufweisen.

Zusätzlich sind auch weitere nicht dargestellte elektronische Baueinheiten vorgesehen, welche beispielsweise das Batteriemanagementsystem, die Batteriesteuerung, die Sicherungselemente und/oder weitere Einrichtungen zum Betrieb und zur Steuerung der Batterie B beinhalten.

### Bezugszeichenliste

- 1: Einzelzelle
- 2: Zellgehäuse
- 2.1: Zellgehäuseseitenwand
- 2.11: Messanschluss
- 2.2: Zellgehäuseseitenwand
- 2.3: Zellgehäuserahmen
- 2.31: Materialerhöhung
- 2.33: Materialrücknahme
- 2.34: Materialrücknahme
- 4: Elektrodenstapel
- 5: Elektrodenfolie
- 6: Separator
- 7: Polkontakt (Stromableiterfahne)
- 8: Wärmeleitplatte
- 8.1: Materialvertiefung
- 9: Elektrisches Anschlusselement
- 10: Elektrisches Anschlusselement
- 11: Wärmeleitfolie
- 12: Spannelement
- 13: Elektronisches Bauelement
- 13.1: Einrichtung zur Zellspannungsüberwachung
- 13.2: Einrichtung zum Zellspannungsausgleich
- 13.3: Kontaktelement

- B: Batterie
- E1: Erste Einzelzelle
- E2: Letzte Einzelzelle
- h: Höhe
- K1 bis K3: Spannungs-Anschlusskontakte
- P+: Positiver Pol
- P-: Negativer Pol
- P_{neg}: Negativer Polanschluss
- Pₚₒₛ: Positiver Polanschluss
- t: Tiefe
- Z: Zellverbund

## Patentansprüche

1. Batterie (B), insbesondere Hochvolt-Batterie mit mehreren Einzelzellen (1), deren Pole (P+, P-) elektrisch parallel und/oder seriell miteinander verschaltet sind und einen Zellverbund (Z) bilden, wobei die jeweilige Einzelzelle (1) von einem aus zwei Zellgehäuseseitenwände (2.1, 2.2) und einem Zellgehäuserahmen (2.3) gebildeten Zellgehäuse (2) umgeben ist und zumindest einer der Pole (P-) einer jeweiligen Einzelzelle (1) mindestens zwei Spannungs-Anschlusskontakte (K1, K2) aufweist, **dadurch gekennzeichnet, dass** das Zellgehäuse (2) zwei Zellgehäuseseitenwände (2.1, 2.2) und einen dazwischen angeordneten, randseitig umlaufenden und die Zellgehäuseseitenwände (2.1, 2.2) elektrisch voneinander isolierenden Zellgehäuserahmen (2.3) aufweist, dass die Pole (P+, P-) der Einzelzelle (1) durch die Zellgehäuseseitenwände (2.1, 2.2) gebildet sind, wobei Polkontakte (7) der jeweiligen Einzelzelle (1) direkt auf gegeneinander elektrisch isolierte Zellgehäuseseitenwände (2.1, 2.2) gelegt sind, dass die Pole (P-, P+) verschiedener Einzelzellen (1) kraftschlüssig, formschlüssig und/oder stoffschlüssig miteinander verbunden sind und dass der Zellgehäuserahmen (2.3) zwei elektrisch voneinander isolierte und voneinander beabstandete Materialrücknahmen (2.33, 2.34) aufweist, in denen die Polkontakte (7) jeweils einer Polarität (+, -) angeordnet sind, wobei die in Richtung der Stapelung der Elektrodenfolien (5) gemessene lichte Höhe (h) einer Materialrücknahme (2.33, 2.34) kleiner oder gleich der entsprechenden Erstreckung der unbeeinflusst übereinander gestapelten zugehörigen Polkontakte (7) ist und deren parallel zur Flachseite einer Elektrodenfolie (5) gemessene Tiefe (t) größer oder gleich der entsprechenden Erstreckung der zugehörigen Polkontakte (7) ist.

2. Batterie (B) nach Anspruch 1,
**dadurch gekennzeichnet, dass**
die Spannungs-Anschlusskontakte (K1, K2) eines der Pole (P-) zellintern elektrisch miteinander verschaltet, insbesondere parallel geschaltet sind.

3. Batterie (B) nach Anspruch 1,
**dadurch gekennzeichnet, dass**
ein erster Spannungs-Anschlusskontakt (K1) einen der Pole (P-) der Einzelzelle (1) und der zweite Spannungs-Anschlusskontakt (K2) einen Messanschluss (2.11) bildet.

4. Batterie (B) nach Anspruch 1,
**dadurch gekennzeichnet, dass**
die Pole (P+, P-) verschiedener Einzelzellen (1) durch Kontaktierung der Zellgehäuseseitenwände (2.1, 2.2) der Einzelzellen (1) miteinander elektrisch verschaltet sind.

5. Batterie (B) nach Anspruch 1,
**dadurch gekennzeichnet, dass**
in dem Zellgehäuse (2) ein Elektrodenstapel (4) angeordnet ist, dessen einzelne Elektroden, vorzugsweise Elektrodenfolien (5), mit den als Stromableiterfahnen ausgebildeten Polkontakten (7) elektrisch leitend verbunden sind.

6. Batterie (B) nach Anspruch 1,
**dadurch gekennzeichnet, dass**
zumindest Elektroden unterschiedlicher Polarität durch einen Separator (6), vorzugsweise eine Separatorfolie, voneinander isoliert sind.

7. Batterie (B) nach Anspruch 1,
**dadurch gekennzeichnet, dass**
Polkontakte (7) gleicher Polarität (+, -) elektrisch leitend miteinander verbunden sind.

8. Batterie (B) nach Anspruch 1,
**dadurch gekennzeichnet, dass**
Polkontakte (7) gleicher Polarität (+, -) elektrisch leitend miteinander verpresst und/oder verschweißt sind.

9. Batterie (B) nach Anspruch 1,
**dadurch gekennzeichnet, dass**
die Zellgehäuseseitenwände (2.1, 2.2) als Flachseiten ausgeführt sind.

10. Batterie (B) nach Anspruch 1,
**dadurch gekennzeichnet, dass**
an einer Zellgehäuseseitenwand (2.2) einer ersten Einzelzelle (E1) und einer Zellgehäuseseitenwand (2.1) einer letzten Einzelzelle (E2) des Zellverbundes (Z) zumindest jeweils ein elektrisches Anschlusselement (9, 10) angeordnet ist.

11. Batterie (B) nach Anspruch 1,
**dadurch gekennzeichnet, dass**
eine Wärmeleitplatte (8) zur Kühlung der Batterie (B) vorgesehen ist.

12. Batterie (B) nach Anspruch 11,
**dadurch gekennzeichnet, dass**
zwischen der Wärmeleitplatte (8) und dem Zellverbund (Z) ein wärmeleitfähiges Material eingebracht ist.

13. Batterie (B) nach Anspruch 12,
**dadurch gekennzeichnet, dass**
das wärmeleitfähige Material eine Vergussmasse, ein Lack und/oder eine Wärmeleitfolie (11) ist.

14. Batterie (B) nach Anspruch 1,
**dadurch gekennzeichnet, dass**
der Zellverbund (Z) und eine Wärmeleitplatte (8) in einem Gehäuserahmen angeordnet sind.

15. Batterie (B) nach Anspruch 14,
**dadurch gekennzeichnet, dass**
der Gehäuserahmen aus zumindest einem den Zellverbund (Z) und die Wärmeleitplatte (8) vollständig umschließenden Spannelement (12), insbesondere einem Spannband oder einem Spannrahmen, gebildet ist.

## Claims

1. Battery (B), in particular high-voltage battery, comprising a plurality of individual cells (1) the poles (P+, P-) of which are electrically interconnected in parallel and/or in series and form a cell assembly (Z), wherein the respective individual cell (1) is surrounded by a cell housing (2) formed of two cell housing side walls (2.1, 2.2) and a cell housing frame (2.3) and wherein at least one of the poles (P-) of the respective individual cell (1) has at least two connection contacts (K1, K2), **characterised in that** the cell housing (2) comprises two cell housing side walls (2.1, 2.2) and a continuous cell housing frame (2.3) extending along the edges in between and electrically insulating the cell housing side walls (2.1, 2.2) from one another, **in that** the poles (P+, P-) of the individual cell (1) are represented by the cell housing side walls (2.1, 2.2), wherein pole contacts (7) of the respective individual cell (1) are directly placed on cell housing side walls (2.1, 2.2) which are electrically insulated against one another, **in that** the poles (P+, P-) of different individual cells (1) are connected to each other non-positively, positively and/or by adhesive force, and **in that** the cell housing frame (2.3) has two material reliefs (2.33, 2,34) which are electrically insulated against and arranged at a distance from one another and in which the pole contacts (7) of one polarity (+, -) are arranged, wherein the free headroom (h) of a material relief (2.33, 2,34) as measured in the stacking direction of the electrode foils (5) is less than or equal to the corresponding dimension of the associated pole contacts (7) stacked in an uninfluenced manner and its depth (t) as measured parallel to the flat side of an electrode foil (5) is greater than or equal to the corresponding dimension of the associated pole contacts (7).

2. Battery (B) according to claim 1,
**characterised in that**
the voltage connection contacts (K1, K2) of one of the poles (P-) are electrically interconnected, in particular connected in parallel, within the cell.

3. Battery (B) according to claim 1,
**characterised in that**
a first voltage connection contact (K1) forms one of the poles (P-) of the individual cell (1) and the second voltage connection contact (K2) forms a measuring connection (2.11).

4. Battery (B) according to claim 1,
**characterised in that**
the poles (P+, P-) of different individual cells (1) are electrically interconnected by contacting the cell housing side walls (2.1, 2.2) of the individual cells (1).

5. Battery (B) according to claim 1,
**characterised in that**
the cell housing (2) accommodates an electrode stack (4), the individual electrodes, preferably electrode foils (5), of which are connected to the pole contacts (7) designed as current arrester lugs in an electrically conductive manner.

6. Battery (B) according to claim 1,
**characterised in that**
at least electrodes of different polarity are insulated against one another by a separator (6), preferably a separator foil.

7. Battery (B) according to claim 1,
**characterised in that**
pole contacts (7) of the same polarity (+, -) are connected to one another in an electrically conductive manner.

8. Battery (B) according to claim 1,
**characterised in that**
pole contacts (7) of the same polarity (+, -) are pressed and/or welded to one another in an electrically conductive manner.

9. Battery (B) according to claim 1,
**characterised in that**
the cell housing side walls (2.1, 2.2) are designed as flat sides.

10. Battery (B) according to claim 1,
**characterised in that**
at least one electric connection element (9, 10) each is provided on a cell housing side wall (2.2) of a first individual cell (E1) and on a cell housing side wall (2.1) of a last individual cell (E2) of the cell assembly (Z).

11. Battery (B) according to claim 1,
**characterised in that**
a heat conducting plate (8) is provided for cooling the battery (B).

12. Battery (B) according to claim 11,
**characterised in that**
a heat conducting material is placed between the heat conducting plate (8) and the cell assembly (Z).

13. Battery (B) according to claim 12,
**characterised in that**
the heat conducting material is a potting compound, a lacquer and/or a heat conducting foil (11).

14. Battery (B) according to claim 1,
**characterised in that**
the cell assembly (Z) and a heat conducting plate (8) are arranged in a housing frame.

15. Battery (B) according to claim 14,
**characterised in that**
the housing frame is represented by at least one clamping element (12), in particular by a retaining strap or a retaining frame.

## Revendications

1. Batterie (B), en particulier, batterie haute tension, comportant plusieurs éléments individuels (1) dont les pôles (P+, P-) sont reliés électriquement entre eux en parallèle et/ou en série et forment un ensemble d'éléments (Z),
chaque élément individuel (1) étant entouré par un boîtier d'élément (2) formé par deux parois latérales de boîtier d'élément (2.1, 2.2) et par un bâti de boîtier d'élément (2.3)
et au moins un des pôles (P-) d'un élément individuel (1) respectif présentant au moins deux bornes de contact de tension (K1, K2),
**caractérisée en ce que** le boîtier d'élément (2) présente deux parois latérales de boîtier d'élément (2.1, 2.2) et un bâti de boîtier d'élément (2.3) disposé entre les deux, lequel bâti d'élément entoure le bord des parois latérales de boîtier d'élément (2.1, 2.2) en les isolant électriquement l'une de l'autre,
, **en ce que** les pôles (P+, P-) de l'élément individuel (1) sont formés par les parois latérales de boîtier d'élément (2.1, 2.2),
, les contacts polaires (7) de chaque élément individuel (1) étant disposés directement sur les parois latérales de boîtier d'élément (2.1, 2.2) isolées électriquement l'une de l'autre,
, **en ce que** les pôles (P+, P-) des différents éléments individuels (1) sont reliés les uns aux autres par liaison de force, par complémentarité de forme et/ou par liaison de matière,
et **en ce que** le bâti de boîtier d'élément (2.3) présente deux reprises de matériaux (2.33, 2.34) séparées et isolées l'une de l'autre,
dans lesquelles sont disposés les contacts polaires (7) de chaque polarité (+, -),
la hauteur de passage (h) d'une reprise de matériau (2.33, 2.34) mesurée dans la direction de l'empilement des feuilles d'électrodes (5) étant inférieure ou égale à l'étendue correspondante des contacts polaires (7) associés, empilés les uns sur les autres de manière neutre
et la profondeur (t) mesurée parallèlement au côté plat d'une feuille d'électrode (5) est supérieure ou égale à l'étendue correspondante des contacts polaires (7) associés.

2. Batterie (B) selon la revendication 1, **caractérisée en ce que** les bornes de contact de tension (K1, K2) d'un des pôles (P-) sont reliées électriquement l'un à l'autre à l'intérieur de l'élément, en particulier sont reliés en parallèle.

3. Batterie (B) selon la revendication 1, **caractérisée en ce qu'**une première borne de contact de tension (K1) d'un des pôles (P-) de l'élément individuel (1) et la deuxième borne de contact de tension (K2) forment une borne de mesure (2.11).

4. Batterie (B) selon la revendication 1, **caractérisée en ce que** les pôles (P+, P-) des différents éléments individuels (1) sont reliés électriquement l'un à l'autre par le contact des parois latérales de boîtier d'élément (2.1, 2.2) des éléments individuels (1).

5. Batterie (B) selon la revendication 1, **caractérisée en ce qu'**un empilement d'électrodes (4) est disposé dans le boîtier d'élément (2), chaque électrode, de préférence des feuilles d'électrode (5), est reliée de manière électriquement conductrice aux contacts polaires (7) conçus comme des cosses de dérivation de courant.

6. Batterie selon la revendication 1, **caractérisée en ce qu'**au moins des électrodes de polarité différente sont isolées par un séparateur (6), de préférence une feuille de séparation.

7. Batterie (B) selon la revendication 1, **caractérisée en ce que** des contacts polaires (7) de même polarité (+, -) sont reliés les uns aux autres de manière électriquement conductrice.

8. Batterie (B) selon la revendication 1, **caractérisée en ce que** des contacts polaires (7) de même polarité (+, -) sont soudés et/ou comprimés les uns aux autres de manière électriquement conductrice.

9. Batterie (B) selon la revendication 1, **caractérisée en ce que** les parois latérales de boîtier d'élément (2.1, 2.2) sont conçues comme des côtés plats.

10. Batterie (B) selon la revendication 1, **caractérisée en ce qu'**au moins un élément de connexion (9, 10) électrique est disposé à chaque fois sur une paroi latérale de boîtier d'élément (2.2) d'un premier élément individuel (E1) et sur une paroi latérale de boîtier d'élément (2.1) d'un dernier élément individuel (E1) de l'ensemble d'éléments (Z).

11. Batterie (B) selon la revendication 1, **caractérisée en ce qu'**une plaque thermoconductrice (8) est conçue pour le refroidissement de la batterie (B).

12. Batterie (B) selon la revendication 11, **caractérisée en ce qu'**entre la plaque thermoconductrice (8) et l'ensemble d'éléments (Z) est appliqué un matériau thermoconducteur.

13. Batterie (B) selon la revendication 12, **caractérisée en ce que** le matériau thermoconducteur est une masse de remplissage, une feuille et/ou une peinture thermoconductrice (11).

14. Batterie (B) selon la revendication 1, **caractérisée en ce que** l'ensemble d'éléments (Z) et une plaque thermoconductrice (8) sont disposés dans un bâti de boîtier.

15. Batterie (B) selon la revendication 14, **caractérisée en ce que** le bâti de boîtier est formé par au moins un élément de serrage (12) entourant entièrement l'ensemble d'éléments (Z) et la plaque thermoconductrice (8), en particulier une bande de serrage ou un cadre de serrage.
